# EUROPEAN PATENT SPECIFICATION

(11) **EP 1 788 595 B1**
(45) Date of publication and mention of the grant of the patent: **16.06.2010**
(21) Application number: 05025181.8
(22) Date of filing: 17.11.2005
(51) Int. Cl.: H01G 4/12

(54) **Solid capacitor and manufacturing method thereof**
Festkondensator und dessen Herstellungsverfahren
Condensateur solide et sa méthode de production

(43) Date of publication of application: 23.05.2007
(73) Proprietor: Ctech Corporation, Taipei County (TW)
(72) Inventor: Shang, Mei Lee, Taipei County (TW); Ting, Keng Lin, Taipei County (TW); Yung, Sheng Huang, Taipei County (TW)
(74) Representative: Kador & Partner

(56) References cited:
- GB-A- 1 316 144
- US-A- 3 679 950
- US-A1- 2003 169 555

## Description

### BACKGROUND OF THE INVENTION

The present invention relates to a capacitor, especially to a solid capacitor that increases the capacity by means of larger surface area of the dielectric layer thereof. Moreover, the solid capacitor in accordance with the present invention can be stacked repeatedly so as to form a multilayer capacitor.

A capacitor is an energy storage component applied in circuits for tuning, filtering, coupling, by-pass, energy conversion and delay. Most common used capacitors are electrolytic capacitors, mica capacitors, ceramic capacitors and vitreous-enamel capacitor. The names refer to the type of dielectric that is used within the capacitor.

| capacitor types | structure and features |
|---|---|
| aluminum electrolytic and capacitor | An aluminum cylinder works as a cathode with liquid electrolyte therein a curved aluminum piece is used as an anode. The flow of direct current causes an insulating metal oxide to grow out of and into the surface of the anode. The metal oxide is used as dielectric. The advantage of electrolytic capacitors is the high capacity per unit volume. The disadvantage of electrolytic capacitors is the non-ideal, lossy characteristics and poor stability. It is used for signal coupling. In usage, please note that the voltage should not be applied in the reverse direction. |
| paper capacitor | Two metal foils as electrodes are clipped on insulated paper and the assembly can be rolled up to form a cylinder that is enclosed inside a metal housing or insulated material such as sealing wax, ceramic or vitreous-enamel. The package is smaller with higher capacitance. Due to high inherent inductance and loss of capacitor, the device is suitable for being applied to low frequency circuit. |
| metallized paper capacitor | The device basically has the same structure with paper capacitors while a metal membrane is used instead of metal foil. Its features are small volume and higher capacitance, generally applied to low-frequency circuit. |
| oil impregnated paper capacitor | By impregnating the paper with special oil, tolerance of the capacitor is improved. It features on high capacity and wide tolerance. However, the volume of the device is quite large. |
| vitreous-enamel capacitor | The dielectric material is vitreous-enamel. It has advantages of ceramic capacitors while the volume is smaller. It withstands high temperature. |
| ceramic capacitor | The dielectric is ceramic and the plates are made from ceramic base with silver membrane. Its features are small volume, good thermostability, higher insulation resistance but low capacity. Thus it is used for high frequency circuit. The ferroelectric ceramic capacitor has higher capacity while the loss and temperature coefficient are higher. Thus it is applied to low frequency circuit. |
| film capacitor | This capacitor has the same structure with the paper capacitor. The dielectric of the capacitor is polyester or polystyrene. The polyester capacitor has higher dielectric constant, small volume, high capacity, and good stability thus is suitable for bypass capacitors. While the polystyrene capacitor has small loss, high insulation resistance but high temperature coefficient. This capacitor is suitable for high frequency circuit. |
| mica capacitor | The silver electrodes or metal foil are plated directly onto the mica dielectric. Several layers of electrodes and mica are laminated and then are cast inside the phenolic resin or sealed inside the epoxy. Its properties are low loss of dielectric, high insulation resistance, low temperature coefficient and it is suitable for high frequency circuit. |
| tantalum or niobium electrolytic capacitor | Tantalum or niobium is used as positive electrode and diluted sulfuric acid works as negative electrode while dielectric is oxide membrane on surface of the tantalum or niobium. It has small volume, high capacity, stable performance, long life, high insulation resistance, and good thermostability. Thus it is applied to equipments with higher requirements of capacitors. |
| semi-variable capacitor | It's also called trimmer capacitor. The device consists of two pieces or two sets of metal spring with dielectric therebetween. The distance or area between two metal springs changes while tuning. The dielectric can be air, ceramic, mica or membrane. |
| variable capacitor | It is constructed by a set of immobile plates called stator, and another set of plates, connected to a common axis, called rotor and its capacity changes according to rotation of the rotor. The two-fold capacitors are two capacitors whose rotors share the common axis. The dielectric of such capacitor can be air or polystyrene. Capacitors with air dielectric with features of large volume and small loss are used in the electron tube radios. The variable capacitor with polystyrene dielectric is a compact sealed capacitor, mostly used in the transistor radio. |

Solid capacitors with dielectric layer made from ceramic material with high dielectric constant have features of environmental protection, low impedance, high thermostability, withstanding high ripple current and high reliability. Compared with traditional electrolytic capacitors, solid capacitors have higher stability thus explosion may occur less frequently.

US 2003 169 555 describes a capacitor where a dielectric ceramic green tape having a conductive metal paste applied thereto is laminated and co-fired with a ceramic tape filled with a vogue material which is burnt off during firing to give a porous electrode layer precursor layer. An electrode layer is made therefrom by impregnating with conductive metal.

The most common solid capacitor is multilayer ceramic capacitor (MLCC) manufactured by suspending ceramic powders in liquid and casting into a thin green sheet with thickness from 20um to 5um or even thinner. Then metal electrodes are sieved(screen) printed onto the sheets which are later stacked with sheets without electrodes alternately to form a laminated structure. After being sintered at high temperature, the device becomes a ceramic sinter that provides an extremely high capacity in a small volume. At last, surface of silver terminal electrode is plated with nickel, tin and lead and then the multilayer ceramic is soldered directly onto the printed circuit board.

The present invention provides a solid capacitor that improves disadvantages of electrolytic capacitors and increases capacity.

### SUMMARY OF THE INVENTION

It is therefore a primary object of the present invention to provide a solid capacitor and the manufacturing method thereof. The capacitor includes a dielectric layer with a plurality of holes on surface thereof and two electrodes arranged on two sides of the dielectric layer respectively. The electrodes contact the holes. Due to the plurality of holes on surface of the dielectric layer, the surface area of the dielectric layer is increased so that the capacity of the solid capacitor is improved.

It is another object of the present invention to provide a solid capacitor and the manufacturing method thereof. While manufacturing the capacitor, a plurality of high temperature volatile matters is mixed on surface of the dielectric layer and part of the high temperature volatile matters is vapored or volatilized during sintering process of the dielectric layer so as to form a plurality of holes on surface of the dielectric layer. Thus the surface area of the dielectric layer is increased and the capacity of the solid capacitor is also getting higher.

It is a further object of the present invention to provide a solid capacitor and the manufacturing method thereof that generate a multilayer capacitor by stacking the capacitor repeatedly so as to increase the capacity.

In order to achieve above objects, the present invention provides a solid capacitor as defined by the features of claims 1, 25 and 34, respectively and a manufacturing method thereof as defined by the features of claim 13
The solid capacitor is composed by a dielectric layer and two electrodes. A plurality of holes formed by an opening process is disposed on surface of the dielectric layer. The two electrodes are connected with the dielectric layer through the holes. Due to the enlarged surface area of the dielectric layer, the capacity of the capacitor is increased. The solid capacitor stores charge by physical means.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1A to Fig. 1D are schematic drawings showing structure of an embodiment in accordance with the present invention;
Fig. 1E is a schematic top view showing an embodiment of the present invention with holes coated with conductive object;
Fig.2 is a schematic drawing showing structure of another embodiment in accordance with the present invention;
Fig. 3 is a curve chart showing capacity of capacitors with and without holes under different frequencies;
Fig. 4A to Fig. 4D are schematic drawings showing structure of a multilayer capacitor in accordance with the present invention.

### DETAILED DESCRIPTION OF THE PREFERRED EMBODIMENT

The present invention provides a solid capacitor for improving disadvantages of conventional capacitors such as easily explosions and environmental pollutions by means of larger surface area for increasing stored charge. And the solid capacitor is a device that stores the capacity of a physical system.

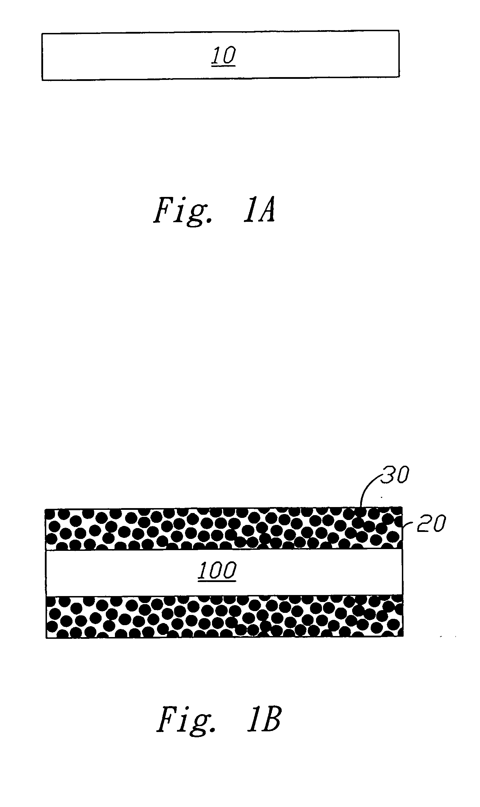

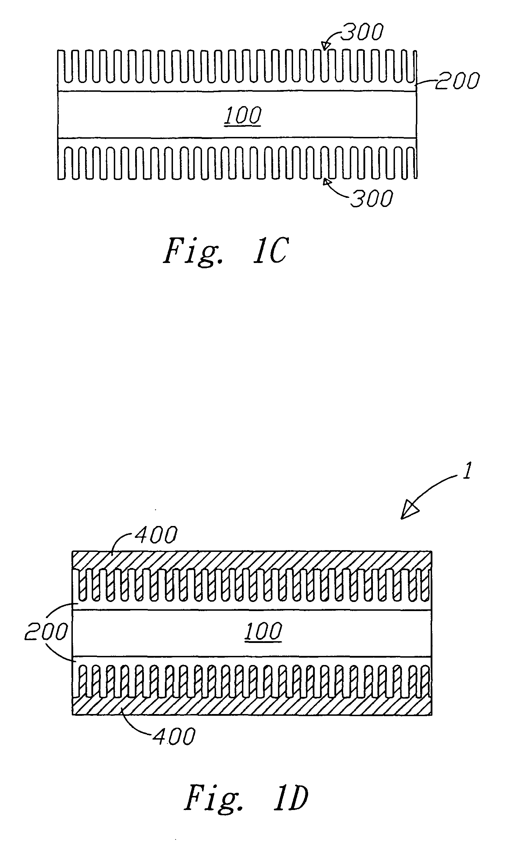

Refer from Fig.1A to Fig.1D, structure of a solid capacitor 1 in accordance with the present invention is disclosed. In the beginning, a dielectric green tape 10 is sintered into a dense dielectric layer 100.
The temperature for sintering ranges from 600 degrees Celsius to 1700 degrees Celsius. Then two sides of the dense dielectric layer 100 are coated with a plurality of dielectric 20 that is mixture of a plurality of high temperature volatile matter 30 or a plurality of conductive objects. The dense dielectric layer 100 and the dielectric 20 are sintered at an operating temperature of 300 to 1700 degrees so as to make the dielectric 20 form a loose dielectric layer 200. After the high temperature volatile matter 30 being volatilized, a plurality of holes 300 connected with the outside are formed on surface of tow sides of the loose dielectric layer 200. The diameter or width of the hole 300 is between 1nm∼100µm while the range of 10nm ∼ 10µm is preferred. And the best range is from 5nm to 50µm. Therefore, the loose dielectric layer 200 with large surface area is formed. Moreover, two sides of the loose dielectric layer 200 are connected with two electrodes 400 respectively through the holes 300. The electrodes 400 are formed on surface of the loose dielectric layer 200 by one of electroplating, electroless plating, sputtering, spin-coating, coating, printing and chemical vapor deposition (CVD) or by combinations of above techniques.

The density ratio of the loose dielectric layer 200 and the dense dielectric layer 100 ranges from 0.05 to 0.95 while the range between 0.1 1 and 0.9 is preferred and the best ratio ranges from 0.15 to 0.85. The material of the dielectric 20 and the dielectric green tape 10 can be the same or different. The material is selected from ceramic dielectric layer, high molecular dielectric layer, and glass dielectric layer or various combinations of above material.

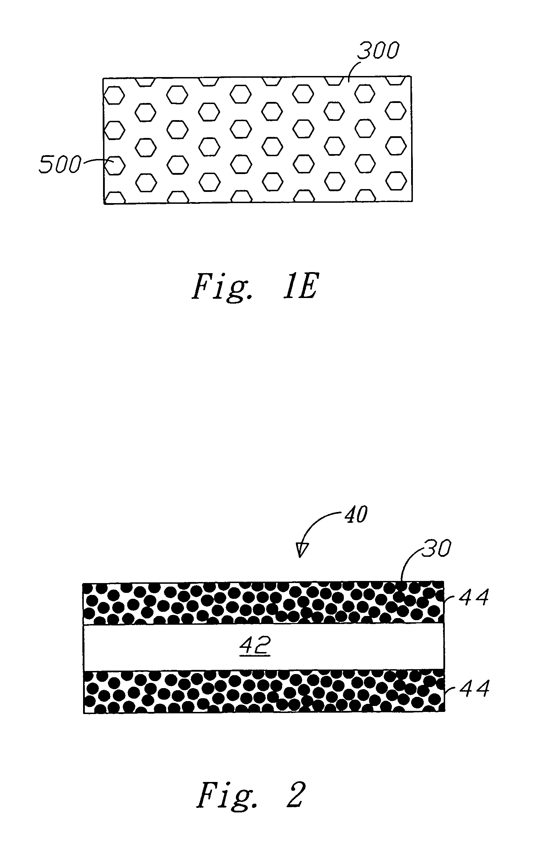

The holes 300 are formed on the loose dielectric layer 200, the holes 300 are connected to the outside, not the holes inside the loose dielectric layer 200 without contact the outside. Moreover, once the dielectric 20 having the high temperature volatile matter 30, the high temperature volatile matter 30 can be carbon, organics or their combinations. After being sintered, the holes 300 of the loose dielectric layer 200 is coated with the conductive substance 500, as shown in Fig. 1E. The conductive substance 500 can be carbon that works as an electrical connection between the electrodes 400 and the loose dielectric layer 200. The solid capacitor according to the present invention stores charge by physical means.

Furthermore, refer to Fig. 2 & Fig. 1C, the present invention further provides another manufacturing method to produce the solid capacitor. At first, a dielectric green tape 40 including a first dielectric layer 42 and two second dielectric layers 44 is formed. The two second dielectric layers 44 mixed with a plurality of high temperature volatile matter 30 or a plurality of conductive objects are disposed on two sides of the first dielectric layer 42. The dielectric green tape 40 is sintered so as to make the first dielectric layer 42 become the dense dielectric layer 100. Also the high temperature volatile matter 30 is volatilized to form the holes 300 so that the second dielectric layers 44 form the loose dielectric layers 200. The first dielectric layer 42 and the second dielectric layers 44 are sintered into dense and loose structure respectively due to different material they are made from. The following manufacturing processes are the same with above descriptions.

Moreover, once the second dielectric layers 44 is mixed with the high temperature volatile matter 30, the high temperature volatile matter 30 can be carbon, organics or their combinations. After being sintered, the loose dielectric layer 200 is generated and the holes 300 thereon should be coated with the conductive object 500 for providing an electrical connection between the electrodes and the loose dielectric layers, as shown in Fig. 1E.

An embodiment is taking as an example for explanation of the present invention:
Experiment group of the present invention:
   Taking a dielectric green tape and press it under pressure of 100 Kg/cm^{2,}, sintered at 1350 degrees Celsius, the operating time is 2 hours. Thus a dense dielectric layer is formed and two outer sides of the dense dielectric layer are coated with dielectric material and carbon fiber (C.F.) at the ratio of 300:1. After being dried at 70 degrees Celsius for 10 minutes, the invention is sintered at a temperature of 1350 degrees so as to form a loose dielectric layer with the thickness of 0.09mm.
Control group without the loose dielectric layer:
   The green tape is pressed under 100 Kg/cm^{2,}, at a temperature of 1350 degrees Celsius, the operating time is 2 hours.

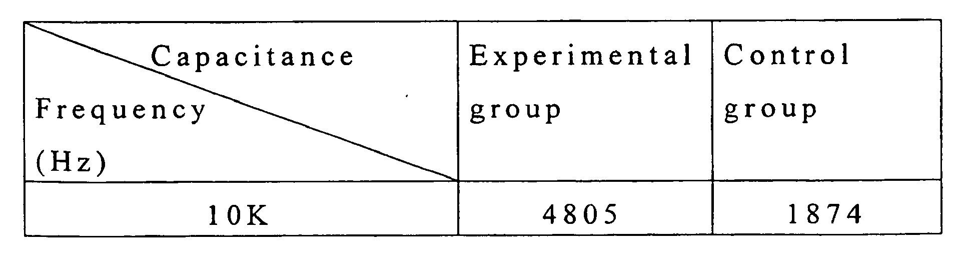

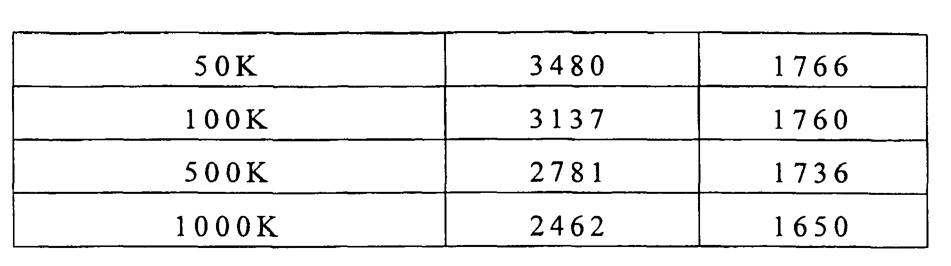

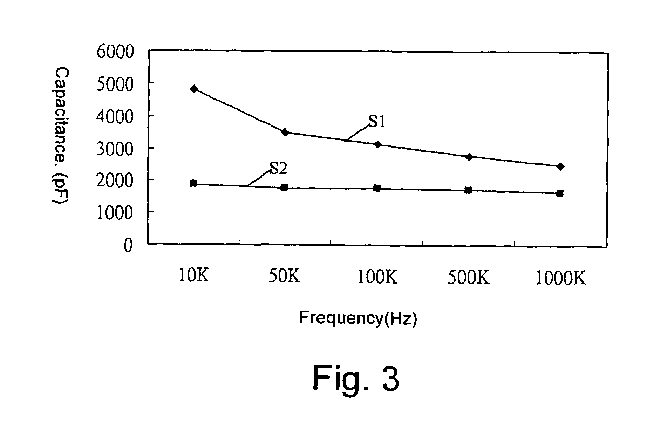

Refer to Fig.3, the curves shows capacity of capacitors with or without holes under different frequencies respectively. As shown in figure, the first curve S1 and the secondary curve S2 represent capacity of capacitors with and without holes respectively under different frequencies. Compared the curve S 1 with the curve S2, it is obvious that the capacitor with holes has higher capacity than the capacitor without holes under different frequencies.

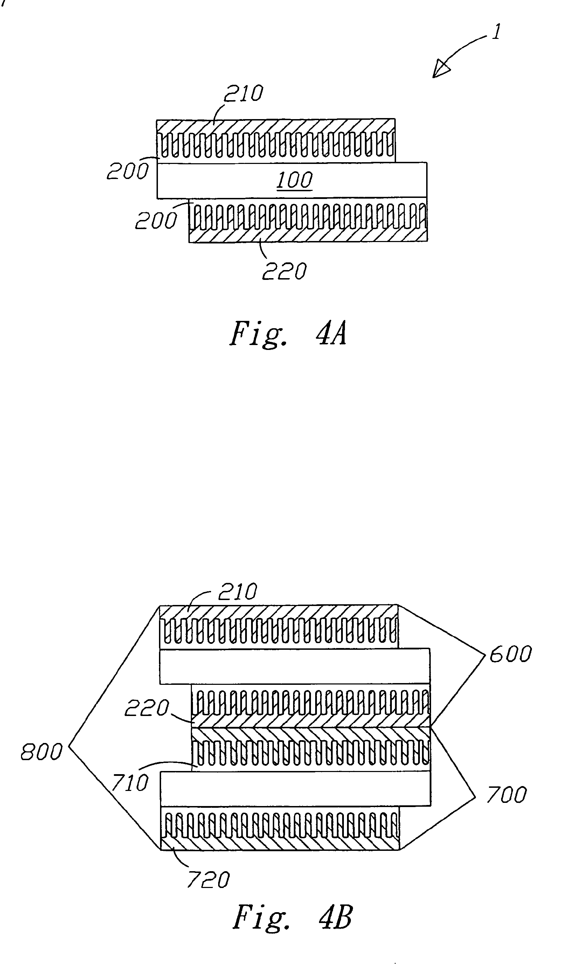

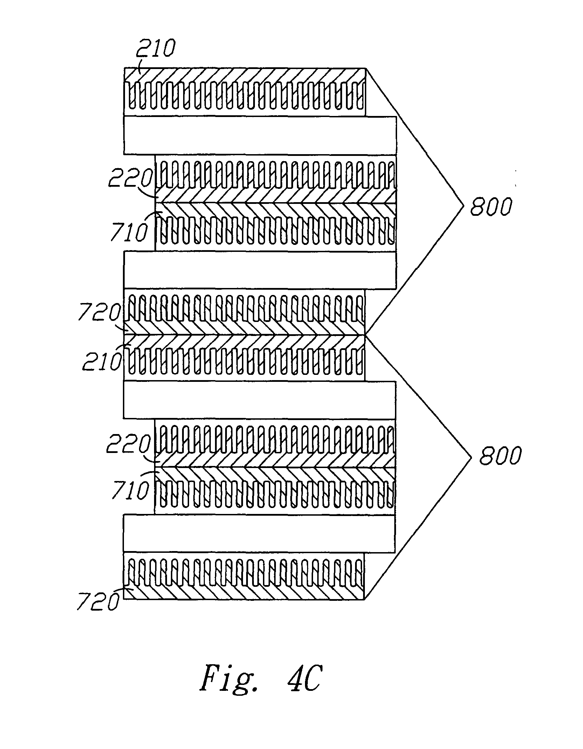

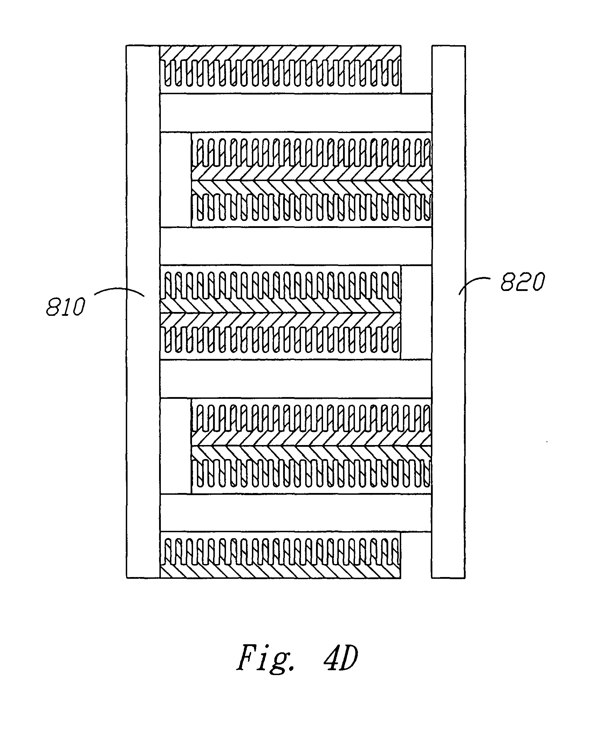

In addition, a solid capacitor according to the present invention can be a multilayer capacitor for demanding of higher capacity. As shown from Fig. 4A to Fig.4D, firstly, the solid capacitor 1 in accordance with the present invention is manufactured as structure in Fig. 4A, the length of two loose dielectric layers 200 of the solid capacitor 1 are shorter than that of the dense dielectric layers 100 and a first electrode 210 as well as a second electrode 220 is disposed thereof. This is a basic unit. Then a first solid capacitor 600 is arranged on a second solid capacitor 700 reversely and the second electrode 220 is electrically connected with a third electrode 710 of the second solid capacitor 700, as shown in Fig. 4B. Thus a repeated unit 800 is formed.

Then the repeated units 800 are stacked repeatedly. A first outer electrode 810 and a second outer electrode 820 are arranged on two outsides. The first outer electrode 810 is electrically connected with the first electrode 210 and a fourth electrode 720 of the second dielectric layer while the second outer electrode 820 is electrically connected with the second electrode 220 and the third electrode 710 so as to form a multilayer capacitor.

Additional advantages and modifications will readily occur to those skilled in the art. Therefore, the invention in its broader aspects is not limited to the specific details, and representative devices shown and described herein. Accordingly, various modifications may be made without departing from the scope of the general inventive concept as defined by the appended claims.

## Claims

1. A solid capacitor comprising:
at least one dense dielectric layer (100);
at least two loose dielectric layers (200) disposed on the two outer sides of the dense dielectric layer (100) wherein the loose dielectric layers (200), have a plurality of holes (300) connected with the outside formed on their surface
and
two electrodes (400) are formed on the outer sides of the two loose dielectric layers (200) respectively and the electrodes (400) contact the loose dielectric layers (200) by the plurality of holes (300),
wherein the ratio of the density of the loose dielectric layer (200) to that of the dense dielectric layer (100) ranges from 0.05 to 0.95.

2. The solid capacitor as claimed in claim 1,
wherein ratio of the density of the loose dielectric layer (200) to that of the dense dielectric layer (100) preferably ranges from 0.1 to 0.9.

3. The solid capacitor as claimed in claim 2,
wherein ratio of the density of the loose dielectric layer (200) to that of the dense dielectric layer (100) best ranges from 0.15 to 0.85.

4. The solid capacitor as claimed in claim 1,
wherein the dense dielectric layer (100) is a ceramic dielectric layer, a high molecular dielectric layer, a glass dielectric layer or various combinations of above dielectric layers.

5. The solid capacitor as claimed in claim 1,
wherein the loose dielectric layer (200) is a ceramic dielectric layer, a high molecular dielectric layer, a glass dielectric layer or various combinations of above dielectric layers.

6. The solid capacitor as claimed in claim 1,
wherein diameter or width of the holes (300) of the loose dielectric layer (200) is from 1nm to 100µm.

7. The solid capacitor as claimed in claim 6,
wherein diameter or width of the holes (300) of the loose dielectric layer (200) is best from 5nm to 50µm.

8. The solid capacitor as claimed in claim 1,
wherein the loose dielectric layer (200) is a mixture with at least one conductive substance (500)

9. The solid capacitor as claimed in claim 1,
wherein surface of the holes (300) is coated with at least one conductive substance (500).

10. The solid capacitor as claimed in claim 8,
wherein the conductive substance (500) is carbon.

11. The solid capacitor as claimed in claim 9,
wherein the conductive substance (500) is carbon.

12. The solid capacitor as claimed in claim 1,
wherein the solid capacitor (1) stores charge in a physical way.

13. A manufacturing method for a solid capacitor comprising the steps of:
forming at least one dense dielectric layer (100) aving at least one loose dielectric layer (200) on two outer sides thereof respectively and a plurality of holes (300) connected with the outside on surface of the at least one loose dielectric layer (200); and
forming an electrode (400) on respective outer side of the loose dielectric layer (200); wherein the electrode (400) contacts the loose dielectric layer (200) through the holes (300), and wherein the ratio of the density of the loose dielectic layer (200) to that of the dense dielectric layer (100) ranges from 0.05 to 0.95.

14. The manufacturing method as claimed in claim 13,
wherein in the step of forming at least one dense dielectric layer (100) having at least one loose dielectric layer (200) one two outer sides thereof respectively, the loose dielectric layer (200) is mixed with a plurality of conductive substances (500).

15. The manufacturing method as claimed in claim 13,
wherein in the step of forming at least one dense dielectric layer (100) having at least one loose dielectric layer (200) one two outer sides thereof respectively, a plurality of conductive subtances (500) are coated on surface of the holes (300).

16. The manufacturing method as claimed in claim 13,
wherein the step of forming at least one dense dielectric layer (100) having at least one loose dielectric layer (200) one two outer sides thereof respectively further comprises the steps of:
providing at least one dielectric green tape; sintering the dielectric green tape to form the dense dielectric layer (100),
coating a plurality of dielectric on two outer sides of the dense dielectric layer (100); and
sintering the dense dielectric layer (100) and the dielectric so as to make the dielectric form the loose dielectric layer (200).

17. The manufacturing method as claimed in claim 16,
wherein in the step of sintering the dielectric green tape to form the dense dielectric layer (100), the operating temperature is from 600 degrees Celsius to 1700 degrees Celsius.

18. The manufacturing method as claimed in claim 16,
wherein in the step of sintering the dense dielectric layer (100) and the dielectric, the operating temperature is from 300 degrees Celsius to 1700 degrees Celsius.

19. The manufacturing method as claimed in claim 16,
wherein in the step of coating a plurality of dielectric on two outer sides of the dense dielectric layer (100), the dielectric is mixed with a plurality of conductive substances (500).

20. The manufacturing method as claimed in claim 16,
wherein the method further comprises after the step of sintering the dense dielectric layer (100) and the dielectric so as to make the dielectric form the loose dielectric layer (200), a step of coating a plurality of conductive substances (500) on surface of the holes (300) of the loose dielectric layer (200).

21. The manufacturing method as claimed in claim 18,
wherein the step of forming at least one dense dielectric layer (100) having at least one loose dielectric layer (200) one two outer sides thereof respectively further comprises the steps of:
forming at least one dielectric reen tape (40) having at least one first dielectric layer (42) and at least two second dielectric layers (44) while the second dielectric layers (44) are arranged on two outer sides of the first dielectric layer (42) and the second dielectric layer (44) is mixed with a plurality of high temperature volatile matters (30) ; and
sintering the dielectric green tape (40) so as to make the first dielectric layer (42) form the dense dielectric layer (100) and the high temperature volatile matters (30) are volatilized for forming the holes (300) so as to make the second dielectric layer (44) become the loose dielectric layer (200).

22. The manufacturing method as claimed in claim 21,
wherein in the step of sintering the dielectric green tape (40), the operating temperature is from 300 degrees Celsius to 1700 degrees Celsius.

23. The manufacturing method as claimed in claim 21,
wherein the high temperature volatile matter (30) is carbon, organics or combinations of carbon and organics.

24. The manufacturing method as claimed in claim 13,
wherein in the step of forming an electrode (400) on respective outer side of the loose dielectric layer (200), the electrode (400) is formed on outer side of the loose dielectric layer (200) by electroplating, electroless plating, sputtering, spin-coating, coating, printing, chemical vapor deposition (CVD) or combinations of above techniques.

25. A solid capacitor comprising:
a dielectric layer having at least one dense dielectric layer (100) and at least two loose dielectric layers (200) on two outer sides of the dense dielectric layer (100); a plurality of holes (300) connected with the outside formed on the surface of two outer sides of the loose dielectric layers;
and
two electrodes (400) formed on the two outer sides of the dielectric layers and in contact with the holes (300),
wherein ratio of the density of the loose dielectric layer (200) to that of the dense dielectric layer (100) ranges from 0.05 to 0.95.

26. The solid capacitor as claimed in claim 25,
wherein ratio of the thickness of the respective loose dielectric layer (200) to that of the dielectric layer ranges from 0.01 to 0.45.

27. The solid capacitor as claimed in claim 25,
wherein ratio of the thickness of the dense dielectric layer (100) to that of the dielectric layer ranges from 0.1 to 0.98.

28. The solid capacitor as claimed in claim 27,
wherein diameter of the holes (300) is from 0.01nm to 10 µm.

29. The solid capacitor as claimed in claim 25,
wherein the dielectric layer is a mixture with a plurality of conductive substances (500).

30. The solid capacitor as claimed in claim 25,
wherein surface of the holes (300) is coated with a plurality of conductive substances (500).

31. The solid capacitor as claimed in claim 29,
wherein the conductive substance (500) is carbon.

32. The solid capacitor as claimed in claim 30,
wherein the conductive substance (500) is carbon.

33. The solid capacitor as claimed in claim 25,
wherein the solid capacitor (1) stores charge in a physical way by assembly of the two electrodes (400) and the dielectric layer.

34. A solid capacitor comprising:
at least a first dielectric layer having at least one dense dielectric layer (100) and at least two loose dielectric layers (200) disposed on two outer sides of the dense dielectric layer (100) with a plurality of holes (300) on surface of two outer sides thereof while the holes (300) are connected with the outside; a first electrode (210) and a second electrode (220) are formed on outer sides of the dielectric layer respectively; the electrodes (210; 220) are in contact with the holes (300); and
at least a second dielectric layer having at least one dense dielectric layer (100) and at least two loose dielectric layers (200) disposed on two outer sides of the dense dielectric layer (100) with a plurality of holes (300) on surface of two outer sides thereof while the holes (300) are connected with the outside; a third electrode (710) and a fourth electrode (720) are disposed on outer sides of the dielectric layer respectively; the electrodes are in contact with the holes (300); the second dielectric layer is arranged reversely over the first dielectric layer while the second electrode (220) contacts the third electrode (210);
wherein the solid capacitor stores charge in a physical way, and ratio of the density of the loose dielectric layer (200) to that of the dense dielectric layer (100) ranges from 0.05 to 0.95.

35. The solid capacitor as claimed in claim 34,
wherein diameter of the holes (300) ranges from 0.01 nm to 10µm.

36. The solid capacitor as claimed in claim 34,
wherein the dielectric layer is a mixture with a plurality of conductive substances (500).

37. The solid capacitor as claimed in claim 34,
wherein surface of the holes (300) is coated with a plurality of conductive substances (500).

38. The solid capacitor as claimed in claim 36,
wherein the conductive substance (500) is carbon.

39. The solid capacitor as claimed in claim 37,
wherein the conductive substance (500) is carbon.

40. The solid capacitor as claimed in claim 34,
wherein the solid capacitors (600; 700) are stacked repeatedly so as to form a multilayer capacitor (800).

41. The solid capacitor as claimed in claim 40,
wherein the solid capacitors (600; 700) are stacked in odd number.

42. The solid capacitor as claimed in claim 40,
wherein the solid capacitors (600; 700) are stacked in even number.

43. The solid capacitor as claimed in claim 40,
wherein the solid capacitor further comprises:
a first outer electrode (810) arranged on one side of the first dielectric layer and the second dielectric layer and electrically connected with the first electrode (210) and the fourth electrode (720); and
a second outer electrode (820) arranged on the other side of the first dielectric layer and the second dielectric layer and electrically connected with the second electrode (220) and the third electrode (710).

## Patentansprüche

1. Feststoffkondensator, der umfasst:
wenigstens eine dichte dielektrische Schicht (100);
wenigstens zwei lockere dielektrische Schichten (200), die auf den zwei Außenseiten der dichten dielektrischen Schicht (100) angeordnet sind, wobei die lockeren dielektrischen Schichten (200) mehrere Löcher (300) besitzen, die mit der auf ihrer Oberfläche gebildeten Außenseite verbunden sind; und
zwei Elektroden (400), die jeweils auf den Außenseiten der zwei lockeren dielektrischen Schichten (200) ausgebildet sind, wobei die Elektroden (400) mit den lockeren dielektrischen Schichten (200) durch die mehreren Löcher (300) in Kontakt sind,
wobei das Verhältnis der Dichte der lockeren dielektrischen Schicht (200) zu jener der dichten dielektrischen Schicht (100) im Bereich von 0,05 bis 0,95 liegt.

2. Feststoffkondensator nach Anspruch 1, wobei das Verhältnis der Dichte der lockeren dielektrischen Schicht (200) zu jener der dichten dielektrischen Schicht (100) vorzugsweise im Bereich von 0,1 bis 0,9 liegt.

3. Feststoffkondensator nach Anspruch 2, wobei das Verhältnis der Dichte der lockeren dielektrischen Schicht (200) zu jener der dichten dielektrischen Schicht (100) am besten im Bereich von 0,15 bis 0,85 liegt.

4. Feststoffkondensator nach Anspruch 1, wobei die lockere dielektrische Schicht (100) eine dielektrische Keramikschicht, eine dielektrische hochmolekulare Schicht, eine dielektrische Glasschicht oder eine von mehreren verschiedenen Kombinationen der obigen dielektrischen Schichten ist.

5. Feststoffkondensator nach Anspruch 1, wobei die lockere dielektrische Schicht (200) eine dielektrische Keramikschicht, eine dielektrische hochmolekulare Schicht, eine dielektrische Glasschicht oder eine von mehreren verschiedenen Kombinationen der obigen dielektrischen Schichten ist.

6. Feststoffkondensator nach Anspruch 1, wobei der Durchmesser oder die Weite der Löcher (300) der lockeren dielektrischen Schicht (200) im Bereich von 1 nm bis 100 µm liegt.

7. Feststoffkondensator nach Anspruch 6, wobei der Durchmesser oder die Weite der Löcher (300) der lockeren dielektrischen Schicht (200) am besten im Bereich von 5 nm bis 50 µm liegt.

8. Feststoffkondensator nach Anspruch 1, wobei die lockere dielektrische Schicht (200) ein Gemisch mit wenigstens einer leitenden Substanz (500) ist.

9. Feststoffkondensator nach Anspruch 1, wobei die Oberfläche der Löcher (300) mit wenigstens einer leitenden Substanz (500) beschichtet ist.

10. Feststoffkondensator nach Anspruch 8, wobei die leitende Substanz (500) Kohlenstoff ist.

11. Feststoffkondensator nach Anspruch 9, wobei die leitende Substanz (500) Kohlenstoff ist.

12. Feststoffkondensator nach Anspruch 1, wobei der Feststoffkondensator (1) Ladung auf physikalischem Weg speichert.

13. Verfahren zum Herstellen eines Feststoffkondensators, das die folgenden Schritte umfasst:
Bilden wenigstens einer dichten dielektrischen Schicht (100), die auf zwei Außenseiten hiervon wenigstens eine lockere dielektrische Schicht (200) und mehrere Löcher (300), die mit der Außenseite auf der Oberfläche der wenigstens einen lockeren dielektrischen Schicht (200) verbunden sind, besitzt; und
Bilden einer Elektrode (400) auf jeweiligen Außenseiten der lockeren dielektrischen Schicht (200), wobei die Elektrode (400) mit der lockeren dielektrischen Schicht (200) durch die Löcher (300) in Kontakt ist, und wobei das Verhältnis der Dichte der lockeren dielektrischen Schicht (200) zu jener der dichten dielektrischen Schicht (100) im Bereich von 0,05 bis 0,95 liegt.

14. Herstellungsverfahren nach Anspruch 13, wobei in dem Schritt des Bildens wenigstens einer dichten dielektrischen Schicht (100), die auf ihren zwei Außenseiten jeweils wenigstens eine lockere dielektrische Schicht (200) besitzt, die lockere dielektrische Schicht (200) mit mehreren leitenden Substanzen (500) gemischt wird.

15. Herstellungsverfahren nach Anspruch 13, wobei in dem Schritt des Bildens wenigstens einer dichten dielektrischen Schicht (100), die auf ihren zwei Außenseiten jeweils wenigstens eine lockere dielektrische Schicht (200) besitzt, mehrere leitende Substanzen (500) auf der Oberfläche der Löcher (300) aufgebracht sind.

16. Herstellungsverfahren nach Anspruch 13, wobei der Schritt des Bildens wenigstens einer dichten dielektrischen Schicht (100), die auf ihren zwei Außenseiten jeweils wenigstens eine lockere dielektrische Schicht (200) besitzt, ferner die folgenden Schritte umfasst:
Vorsehen wenigstens eines dielektrischen Rohbandes;
Sintern des dielektrischen Rohbandes, um die dichte dielektrische Schicht (100) zu bilden;
Aufbringen mehrerer Dielektrika auf die zwei Außenseiten der dichten dielektrischen Schicht (100); und
Sintern der dichten dielektrischen Schicht (100) und der Dielektrika, um zu bewirken, dass die Dielektrika die lockere dielektrische Schicht (200) bilden.

17. Herstellungsverfahren nach Anspruch 16, wobei in dem Schritt des Sinterns des dielektrischen Rohbandes, um die dichte dielektrische Schicht (100) zu bilden, die Betriebstemperatur im Bereich von 600 Grad Celsius bis 1700 Grad Celsius liegt.

18. Herstellungsverfahren nach Anspruch 16, wobei in dem Schritt des Sinterns der dichten dielektrischen Schicht (100) und des Dielektrikums die Betriebstemperatur im Bereich von 300 Grad Celsius bis 1700 Grad Celsius liegt.

19. Herstellungsverfahren nach Anspruch 16, wobei in dem Schritt des Aufbringens mehrerer Dielektrika auf die zwei Außenseiten der dichten dielektrischen Schicht (100) das Dielektrikum mit mehreren leitenden Substanzen (500) gemischt wird.

20. Herstellungsverfahren nach Anspruch 16, wobei das Verfahren ferner umfasst:
nach dem Schritt des Sinterns der dichten dielektrischen Schicht (100) und des Dielektrikums, damit das Dielektrikum die lockere dielektrische Schicht (200) bildet, einen Schritt des Aufbringens mehrerer leitender Substanzen (500) auf die Oberfläche der Löcher (300) der lockeren dielektrischen Schicht (200).

21. Herstellungsverfahren nach Anspruch 18, wobei der Schritt des Bildens wenigstens einer dichten dielektrischen Schicht (100), auf deren zwei Außenseiten wenigstens jeweils eine lockere dielektrische Schicht (200) vorhanden ist, ferner die folgenden Schritte umfasst:
Bilden wenigstens eines dielektrischen Rohbandes (40) mit wenigstens einer ersten dielektrischen Schicht (42) und wenigstens zwei zweiten dielektrischen Schichten (44), wobei die zweiten dielektrischen Schichten (44) auf den zwei Außenseiten der ersten dielektrischen Schicht (42) angeordnet sind und die zweite dielektrische Schicht (44) mit mehreren flüchtigen Hochtemperaturstoffen (30) gemischt wird; und
Sintern des dielektrischen Rohbandes (40), damit die erste dielektrische Schicht (42) die dichte dielektrische Schicht (100) bildet und die flüchtigen Hochtemperaturstoffe (30) sich verflüchtigen, um die Löcher (300) zu bilden, damit die zweite dielektrische Schicht (400) die lockere dielektrische Schicht (200) wird.

22. Herstellungsverfahren nach Anspruch 21, wobei in dem Schritt des Sinterns des dielektrischen Rohbandes (40) die Betriebstemperatur im Bereich von 300 Grad Celsius bis 1700 Grad Celsius liegt.

23. Herstellungsverfahren nach Anspruch 21, wobei der flüchtige Hochtemperaturstoff (30) Kohlenstoff, organische Materialien oder Kombinationen aus Kohlenstoff und organischen Materialien enthält.

24. Herstellungsverfahren nach Anspruch 13, wobei in dem Schritt des Bildens einer Elektrode (400) auf der jeweiligen Außenseite der losen dielektrischen Schicht (200) die Elektrode (400) auf der Außenseite der lockeren dielektrischen Schicht (200) durch Elektrobeschichtung, chemisches Beschichtung, Katodenzerstäubung, Schleuderbeschichtung, Überziehen, Drucken, Abscheiden aus der Dampfphase (CVD) oder durch Kombinationen der obigen Techniken gebildet wird.

25. Feststoffkondensator, der umfasst:
eine dielektrische Schicht, die wenigstens eine dichte dielektrische Schicht (100) und wenigstens zwei lockere dielektrische Schichten (200) auf den zwei Außenseiten der dichten dielektrischen Schicht (100) besitzt;
mehrere Löcher (300), die mit der Außenseite verbunden sind, die auf der Oberfläche der zwei Außenseiten der lockeren dielektrischen Schichten gebildet ist; und
zwei Elektroden (400), die auf den zwei Außenseiten der dielektrischen Schichten gebildet sind und mit den Löchern (300) in Kontakt sind,
wobei das Verhältnis der Dichte der lockeren dielektrischen Schicht (200) zu jener der dichten dielektrischen Schicht (100) im Bereich von 0,05 bis 0,95 liegt.

26. Feststoffkondensator nach Anspruch 25, wobei das Verhältnis der Dicke der jeweiligen lockeren dielektrischen Schicht (200) zu jener der dielektrischen Schicht im Bereich von 0,01 bis 0,45 liegt.

27. Feststoffkondensator nach Anspruch 25, wobei das Verhältnis der Dicke der dichten dielektrischen Schicht (100) zu jener der dielektrischen Schicht im Bereich von 0,1 bis 0,98 liegt.

28. Feststoffkondensator nach Anspruch 27, wobei der Durchmesser der Löcher (300) im Bereich von 0,01 nm bis 10 µm liegt.

29. Feststoffkondensator nach Anspruch 25, wobei die dielektrische Schicht ein Gemisch mit mehreren leitenden Substanzen (500) ist.

30. Feststoffkondensator nach Anspruch 25, wobei die Oberfläche der Löcher (300) mit mehreren leitenden Substanzen (500) beschichtet ist.

31. Feststoffkondensator nach Anspruch 29, wobei die leitende Substanz (500) Kohlenstoff ist.

32. Feststoffkondensator nach Anspruch 30, wobei die leitende Substanz (500) Kohlenstoff ist.

33. Feststoffkondensator nach Anspruch 25, wobei der Feststoffkondensator (1) Ladung auf physikalischem Weg durch Zusammenfügen der zwei Elektroden (400) und der dielektrischen Schicht speichert.

34. Feststoffkondensator, der umfasst:
wenigstens eine erste dielektrische Schicht, die wenigstens eine dichte dielektrische Schicht (100) und wenigstens zwei lockere dielektrische Schichten (200), die auf den zwei Außenseiten der dichten dielektrischen Schicht (100) angeordnet sind, besitzt, wobei auf der Oberfläche ihrer zwei Außenseiten mehrere Löcher (300) ausgebildet sind, wobei die Löcher (300) mit der Außenseite verbunden sind; eine erste Elektrode (210) und eine zweite Elektrode (220) auf den Außenseiten der dielektrischen Schicht ausgebildet sind; die Elektroden (210; 220) mit den Löchern (300) in Kontakt sind; und
wenigstens eine zweite dielektrische Schicht, die wenigstens eine dichte dielektrische Schicht (100) und wenigstens zwei lockere dielektrische Schichten (200), die auf den zwei Außenseiten der dichten dielektrischen Schicht (100) angeordnet sind, besitzt, wobei auf der Oberfläche ihrer zwei Außenseiten mehrere Löcher (300) ausgebildet sind, wobei die Löcher (300) mit der Außenseite verbunden sind; eine dritte Elektrode (710) und eine vierte Elektrode (720) auf den Außenseiten der dielektrischen Schicht angeordnet sind; die Elektroden mit den Löchern (300) in Kontakt sind; die zweite dielektrische Schicht umgekehrt über der ersten dielektrischen Schicht angeordnet ist, während die zweite Elektrode (220) mit der dritten Elektrode (710) in Kontakt ist;
wobei der Feststoffkondensator Ladung auf physikalischem Weg speichert und das Verhältnis der Dichte der lockeren dielektrischen Schicht (200) zu jener der dichten dielektrischen Schicht (100) im Bereich von 0,05 bis 0,95 liegt.

35. Feststoffkondensator nach Anspruch 34, wobei der Durchmesser der Löcher (300) im Bereich von 0,01 nm bis 10 µm liegt.

36. Feststoffkondensator nach Anspruch 34, wobei die dielektrische Schicht ein Gemisch mit mehreren leitenden Substanzen (500) ist.

37. Feststoffkondensator nach Anspruch 34, wobei die Oberfläche der Löcher (300) mit mehreren leitenden Substanzen (500) beschichtet ist.

38. Feststoffkondensator nach Anspruch 36, wobei die leitende Substanz (500) Kohlenstoff ist.

39. Feststoffkondensator nach Anspruch 37, wobei die leitende Substanz (500) Kohlenstoff ist.

40. Feststoffkondensator nach Anspruch 34, wobei die Feststoffkondensatoren (600; 700) mehrfach gestapelt sind, um einen Mehrschichtkondensator (800) zu bilden.

41. Feststoffkondensator nach Anspruch 40, wobei die Feststoffkondensatoren (600; 700) in einer ungeraden Anzahl gestapelt sind.

42. Feststoffkondensator nach Anspruch 40, wobei die Feststoffkondensatoren (600; 700) in einer geraden Anzahl gestapelt sind.

43. Feststoffkondensator nach Anspruch 40, wobei der Feststoffkondensator ferner umfasst:
eine erste äußere Elektrode (810), die auf einer Seite der ersten dielektrischen Schicht und der zweiten dielektrischen Schicht angeordnet ist und mit der ersten Elektrode (210) und der vierten Elektrode (720) elektrisch verbunden ist; und
eine zweite äußere Elektrode (820), die auf der anderen Seite der ersten dielektrischen Schicht und der zweiten dielektrischen Schicht angeordnet ist und mit der zweiten Elektrode (220) und mit der dritten Elektrode (710) elektrisch verbunden ist.

## Revendications

1. Condensateur solide comprenant :
au moins une couche diélectrique dense (100) ;
au moins deux couches diélectriques meubles (200) disposées sur les deux côtés extérieurs de la couche diélectrique dense (100), dans lequel les couches diélectriques meubles (200) présentent une pluralité de trous (300) connectés à l'extérieur formés sur leur surface ; et
deux électrodes (400) sont formées sur les côtés extérieurs des deux couches diélectriques meubles (200) respectivement et les électrodes (400) entrent en contact avec les couches diélectriques meubles (200) par la pluralité des trous (300) ;
dans lequel le rapport de la densité de la couche diélectrique meuble (200) sur celle de la couche diélectrique dense (100) se situe dans une plage comprise entre 0,05 et 0,95.

2. Condensateur solide selon la revendication 1, dans lequel le rapport de la densité de la couche diélectrique meuble (200) sur celle de la couche diélectrique dense (100) se situe, de préférence, dans une plage comprise entre 0,1 et 0,9.

3. Condensateur solide selon la revendication 2, dans lequel le rapport de la densité de la couche diélectrique meuble (200) sur celle de la couche diélectrique dense (100) se situe, mieux encore, dans une plage comprise entre 0,15 et 0,85.

4. Condensateur solide selon la revendication 1, dans lequel la couche diélectrique dense (100) est une couche diélectrique en céramique, une couche diélectrique à poids moléculaire élevé, une couche diélectrique en verre ou une couche réalisée selon diverses combinaisons des couches diélectriques ci-dessus.

5. Condensateur solide selon la revendication 1, dans lequel la couche diélectrique meuble (200) est une couche diélectrique en céramique, une couche diélectrique à poids moléculaire élevé, une couche diélectrique en verre ou une couche réalisée selon diverses combinaisons des couches diélectriques ci-dessus.

6. Condensateur solide selon la revendication 1, dans lequel le diamètre ou la largeur des trous (300) de la couche diélectrique meuble (200) se situe dans une plage comprise entre 1 nm et 100 µm.

7. Condensateur solide selon la revendication 6, dans lequel le diamètre ou la largeur des trous (300) de la couche diélectrique meuble (200) se situe, mieux encore, dans une plage comprise entre 5 nm et 50 µm.

8. Condensateur solide selon la revendication 1, dans lequel la couche diélectrique meuble (200) est un mélange avec au moins une substance conductrice (500).

9. Condensateur solide selon la revendication 1, dans lequel la surface des trous (300) est revêtue d'au moins une substance conductrice (500).

10. Condensateur solide selon la revendication 8, dans lequel la substance conductrice (500) est du carbone.

11. Condensateur solide selon la revendication 9, dans lequel la substance conductrice (500) est du carbone.

12. Condensateur solide selon la revendication 1, dans lequel le condensateur solide (1) stocke une charge d'une manière physique.

13. Procédé de fabrication d'un condensateur solide comprenant les étapes consistant à :
former au moins une couche diélectrique dense (100) présentant au moins une couche diélectrique meuble (200) sur deux côtés extérieurs de celle-ci respectivement et une pluralité de trous (300) connectés à l'extérieur sur la surface de l'au moins une couche diélectrique meuble (200) ; et
former une électrode (400) sur le côté extérieur respectif de la couche diélectrique meuble (200) ;
dans lequel l'électrode (400) entre en contact avec la couche diélectrique meuble (200) à travers les trous (300) ; et
dans lequel le rapport de la densité de la couche diélectrique meuble (200) sur celle de la couche diélectrique dense (100) se situe dans une plage comprise entre 0,05 et 0,95.

14. Procédé de fabrication selon la revendication 13, dans lequel dans l'étape consistant à former au moins une couche diélectrique dense (100) présentant au moins une couche diélectrique meuble (200) sur deux côtés extérieurs de celle-ci respectivement, la couche diélectrique meuble (200) est mélangée à une pluralité de substances conductrices (500).

15. Procédé de fabrication selon la revendication 13, dans lequel dans l'étape consistant à former au moins une couche diélectrique dense (100) présentant au moins une couche diélectrique meuble (200) sur deux côtés extérieurs de celle-ci respectivement, une pluralité de substances conductrices (500) revêtent la surface des trous (300).

16. Procédé de fabrication selon la revendication 13, dans lequel l'étape consistant à former au moins une couche diélectrique dense (100) présentant au moins une couche diélectrique meuble (200) sur deux côtés extérieurs de celle-ci respectivement, comprend en outre les étapes consistant à :
fournir au moins une bande verte diélectrique ;
fritter la bande verte diélectrique de manière à former la couche diélectrique dense (100) ;
revêtir d'une pluralité de diélectriques les deux côtés extérieurs de la couche diélectrique dense (100) ; et
fritter la couche diélectrique dense (100) et le diélectrique de façon à ce que le diélectrique forme la couche diélectrique meuble (200).

17. Procédé de fabrication selon la revendication 16, dans lequel dans l'étape consistant à fritter la bande verte diélectrique de façon à former la couche diélectrique dense (100), la température de fonctionnement se situe dans une plage comprise entre 600 degrés Celsius et 1700 degrés Celsius.

18. Procédé de fabrication selon la revendication 16, dans lequel dans l'étape consistant à fritter la couche diélectrique dense (100) et le diélectrique, la température de fonctionnement se situe dans une plage comprise entre 300 degrés Celsius et 1700 degrés Celsius.

19. Procédé de fabrication selon la revendication 16, dans lequel dans l'étape consistant à revêtir d'une pluralité de diélectriques les deux côtés extérieurs de la couche diélectrique dense (100), le diélectrique est mélangé à une pluralité de substances conductrices (500).

20. Procédé de fabrication selon la revendication 16, dans lequel le procédé comprend en outre, après l'étape consistant à fritter la couche diélectrique dense (100) et le diélectrique de façon à ce que le diélectrique forme la couche diélectrique meuble (200), une étape consistant à revêtir d'une pluralité de substances conductrices (500) la surface des trous (300) de la couche diélectrique meuble (200).

21. Procédé de fabrication selon la revendication 18, dans lequel l'étape consistant à former au moins une couche diélectrique dense (100) présentant au moins une couche diélectrique meuble (200) sur deux côtés extérieurs de celle-ci respectivement, comprend en outre les étapes consistant à :
former au moins une bande verte diélectrique (40) présentant au moins une première couche diélectrique (42) et au moins deux deuxièmes couches diélectriques (44) dans laquelle les deuxièmes couches diélectriques (44) sont disposées sur les deux côtés extérieurs de la première couche diélectrique (42) et la deuxième couche diélectrique (44) est mélangée à une pluralité de substances volatiles à haute température (30) ; et
fritter la bande verte diélectrique (40) de façon à ce que la première couche diélectrique (42) forme la couche diélectrique dense (100) et les substances volatiles à haute température (30) sont volatilisés de manière à former les trous (300) de façon à ce que la deuxième couche diélectrique (44) devienne la couche diélectrique meuble (200).

22. Procédé de fabrication selon la revendication 21, dans lequel dans l'étape consistant à fritter la bande verte diélectrique (40), la température de fonctionnement se situe dans une plage comprise entre 300 degrés Celsius et 1700 degrés Celsius.

23. Procédé de fabrication selon la revendication 21, dans lequel les substances volatiles à haute température (30) sont du carbone, des matériaux organiques ou des combinaisons de carbone et de matériaux organiques.

24. Procédé de fabrication selon la revendication 13, dans lequel dans l'étape consistant à former une électrode (400) sur un côté extérieur respectif de la couche diélectrique meuble (200), l'électrode (400) est formée sur le côté extérieur de la couche diélectrique meuble (200) par dépôt électrolytique, par dépôt autocatalytique, par pulvérisation, par dépôt par centrifugation, par revêtement, par impression, par dépôt chimique en phase vapeur (CVD) ou en faisant appel à des combinaisons des techniques ci-dessus.

25. Condensateur solide comprenant :
une couche diélectrique présentant au moins une couche diélectrique dense (100) et au moins deux couches diélectriques meubles (200) sur les deux côtés extérieurs de la couche diélectrique dense (100) ;
une pluralité de trous (300) connectés à l'extérieur formés sur la surface des deux côtés extérieurs des couches diélectriques meubles (200) ; et
deux électrodes (400) formées sur les deux côtés extérieurs des couches diélectriques et en contact avec les trous (300) ;
dans lequel le rapport de la densité de la couche diélectrique meuble (200) sur celle de la couche diélectrique dense (100) se situe dans une plage comprise entre 0,05 et 0,95.

26. Condensateur solide selon la revendication 25, dans lequel le rapport de l'épaisseur de la couche diélectrique meuble (200) respective sur celle de la couche diélectrique se situe dans une plage comprise entre 0,01 et 0,45.

27. Condensateur solide selon la revendication 25, dans lequel le rapport de l'épaisseur de la couche diélectrique dense (100) sur celle de la couche diélectrique se situe dans une plage comprise entre 0,1 et 0,98.

28. Condensateur solide selon la revendication 27, dans lequel le diamètre des trous (300) se situe dans une plage comprise entre 0,01 nm et 10 µm.

29. Condensateur solide selon la revendication 25, dans lequel la couche diélectrique est un mélange avec une pluralité de substances conductrices (500).

30. Condensateur solide selon la revendication 25, dans lequel la surface des trous (300) est revêtue d'une pluralité de substances conductrices (500).

31. Condensateur solide selon la revendication 29, dans lequel la substance conductrice (500) est du carbone.

32. Condensateur solide selon la revendication 30, dans lequel la substance conductrice (500) est du carbone.

33. Condensateur solide selon la revendication 25, dans lequel le condensateur solide (1) stocke une charge d'une manière physique par l'assemblage des deux électrodes (400) et de la couche diélectrique.

34. Condensateur solide comprenant :
au moins une première couche diélectrique présentant au moins une couche diélectrique dense (100) et au moins deux couches diélectriques meubles (200) disposées sur les deux côtés extérieurs de la couche diélectrique dense (100) avec une pluralité de trous (300) sur la surface des deux côtés extérieurs de celle-ci tandis que les trous (300) sont connectés à l'extérieur ; une première électrode (210) et une deuxième électrode (220) sont formées sur les côtés extérieurs de la couche diélectrique, respectivement; les électrodes (210 ; 220) sont en contact avec les trous (300) ; et
au moins une deuxième couche diélectrique présentant au moins une couche diélectrique dense (100) et au moins deux couches diélectriques meubles (200) disposées sur les deux côtés extérieurs de la couche diélectrique dense (100) avec une pluralité de trous (300) sur la surface des deux côtés extérieurs de celle-ci tandis que les trous (300) sont connectés à l'extérieur ; une troisième électrode (710) et une quatrième électrode (720) sont formées sur les côtés extérieurs de la couche diélectrique, respectivement ; les électrodes sont en contact avec les trous (300) ; la deuxième couche diélectrique est disposée de manière opposée sur la première couche diélectrique tandis que la deuxième électrode (220) entre en contact avec la troisième électrode (710) ;
dans lequel le condensateur solide stocke une charge d'une manière physique, et le rapport de la densité de la couche diélectrique meuble (200) sur celle de la couche diélectrique dense (100) se situe dans une plage comprise entre 0,05 et 0,95.

35. Condensateur solide selon la revendication 34, dans lequel le diamètre des trous (300) se situe dans une plage comprise entre 0,01 nm et 10 µm.

36. Condensateur solide selon la revendication 34, dans lequel la couche diélectrique est un mélange avec une pluralité de substances conductrices (500).

37. Condensateur solide selon la revendication 34, dans lequel la surface des trous (300) est revêtue d'une pluralité de substances conductrices (500).

38. Condensateur solide selon la revendication 36, dans lequel la substance conductrice (500) est du carbone.

39. Condensateur solide selon la revendication 37, dans lequel la substance conductrice (500) est du carbone.

40. Condensateur solide selon la revendication 34, dans lequel les condensateurs solides (600 ; 700) sont empilés à plusieurs reprises de façon à former un condensateur multicouche (800).

41. Condensateur solide selon la revendication 40, dans lequel les condensateurs solides (600 ; 700) sont empilés en nombre impair.

42. Condensateur solide selon la revendication 40, dans lequel les condensateurs solides (600 ; 700) sont empilés en nombre pair.

43. Condensateur solide selon la revendication 40, dans lequel le condensateur solide comprend en outre :
une première électrode extérieure (810) disposée sur un côté de la première couche diélectrique et de la deuxième couche diélectrique et connectée de manière électrique à la première électrode (210) et à la quatrième électrode (720) ; et
une deuxième électrode extérieure (820) disposée sur l'autre côté de la première couche diélectrique et de la deuxième couche diélectrique et connectée de manière électrique à la deuxième électrode (220) et à la troisième électrode (710).
